(19) Europäisches Patentamt
European Patent Office
Office européen des brevets

(11) Publication number: **0 381 210 A2**

(12) **EUROPEAN PATENT APPLICATION**

(21) Application number: **90102004.0**

(51) Int. Cl.5: **G11B 7/24, G11B 7/16**

(22) Date of filing: **01.02.90**

(30) Priority: **01.02.89 JP 23064/89**

(43) Date of publication of application: **08.08.90 Bulletin 90/32**

(84) Designated Contracting States: **AT BE CH DE DK ES FR GB GR IT LI LU NL SE**

(71) Applicant: **MITSUI PETROCHEMICAL INDUSTRIES, LTD.**
**2-5, Kasumigaseki 3-chome Chiyoda-ku**
**Tokyo 100(JP)**

(72) Inventor: **Kuroiwa, Mitsuyuki**
**c/o MITSUI PETROCHEMICAL INDUSTRIES, LTD.**
**3 Chigusa-Kaigan, Ichihara-shi, Chiba(JP)**
Inventor: **Yoshitake, Junichi**
**c/o MITSUI PETROCHEMICAL INDUSTRIES, LTD.**
**3 Chigusa-Kaigan, Ichihara-shi, Chiba(JP)**
Inventor: **Miyazaki, Shuji, c/o TOYO INK MFG. CO., LTD.**
**3-13, Kyobashi 2-chome, Chuo-ku**
**Tokyo(JP)**
Inventor: **Sakamoto, Makoto, c/o TOYO INK MFG. CO., LTD.**
**3-13, Kyobashi 2-chome, Chuo-ku**
**Tokyo(JP)**

(74) Representative: **Hansen, Bernd, Dr.rer.nat. et al**
**Hoffmann, Eitle & Partner Patentanwälte**
**Arabellastrasse 4 Postfach 81 04 20**
**D-8000 München 81(DE)**

(54) **Optical recording media and process for preparing same.**

(57) The optical recording media of the present invention comprise a transparent substrate and an organic dye thin film layer formed on said substrate, said organic dye thin film layer comprising an organic dye and a liquid organic compound having a boiling point of not lower than 200 °C and capable of dissolving said organic dye. A process for preparing the optical recording media is also disclosed. Recording to the optical recording media so prepared can be made with low recording power and the media have excellent recording sensitivity.

EP 0 381 210 A2

# OPTICAL RECORDING MEDIA AND PROCESS FOR PREPARING SAME

## FIELD OF THE INVENTION

This invention relates to optical recording media capable of writing and reading out information by irradiation with laser beam, and to a process for preparing said optical recording media.

## BACKGROUND OF THE INVENTION

Known in the art are many optical recording media wherein the writing and readout of information are carried out by irradiation with laser beam. Of these recording media, there are known optical recording media wherein a recording layer provided on a substrate is irradiated with laser beam to cause changes such as fusion (melting), evaporation, decomposition, etc., in the irradiated area and thereby carrying out recording.

For example, optical recording media comprising a transparent substrate and an organic dye thin film layer as a recording layer provided on said substrate are disclosed in Japanese Patent Laid-Open Publication Nos. 82093/1982, 56892/1983, 89842/1985 and 150243/1985. In these optical recording media, the writing and readout of information are carried out by irradiation with laser beam of a relatively long wavelength such as 780 nm or longer. In such optical recording media, fine concavities (pits) can be easily formed on the organic thin film layer by fusing, evaporating or decomposing organic dyes by irradiation with semiconductor laser which allows optical systems for reproducing recording to be miniaturized.

Generally, the above-mentioned optical recording media are prepared by dissolving an organic dye in an organic solvent and coating a transparent substrate with the resulting organic dye solution containing optionally a high-molecular binder to form an organic dye thin film layer on the transparent substrate.

The organic dye thin film layers of the optical recording media as mentioned above have such problems that absorption coefficient for semiconductor laser beam is small, recording is not made with low power, and recording sensitivity is poor.

With the view of solving such problems as mentioned above, the present inventors have eagerly studied and found that such problems can be solved by incorporating into the organic dye thin film layer as the recording layer formed on the transparent substrate liquid organic compound having a boiling point of no lower than 200 °C and capable of dissolving the organic dye. The present invention has been accomplished on the basis of this finding.

## OBJECT OF THE INVENTION

The present invention is intended to solve such problems associated with the prior art as mentioned above and an object of the present invention is to provide organic recording media wherein recording can be made even by low power and hence are excellent in recording sensitivity.

Another object of the present invention is to provide a process for preparing the above-mentioned optical recording media.

## SUMMARY OF THE INVENTION

The optical recording media of the present invention comprise a transparent substrate and an ,organic dye thin film layer formed on said substrate, said organic dye thin film layer comprising an organic dye and a liquid organic compound having a boiling point of not lower than 200 °C and capable of dissolving said organic dye.

The process for preparing the optical recording media of the present invention comprises dissolving an organic dye in an organic solvent and coating a transparent substrate with the resulting organic dye solution to form an organic dye thin film layer on said transparent substrate, said organic dye solution comprising a

liquid organic compound having a boiling point of not lower than 200 °C and capable of dissolving said organic dye.

## BRIEF DESCRIPTION OF THE DRAWINGS

Figures 1 and 2 are each a graph illustrating the relationship between signal intensity and recording laser power(mW) in the optical recording media of the present invention and that of Comparative Examples.

## DETAILED DESCRIPTION OF THE INVENTION

Now, the optical recording media of the present invention and the process for preparing the same will be illustrated in more detail below.

As the transparent substrate of the present invention, there can be used substrates which are conventionally used for the optical recording media and these substrates preferably have a light transmittance of at least 85 % for conducting the writing and readout of information and have low optical anisotropy. Concrete examples of materials for the substrates include glass, thermoplastic resins such as acrylic resins, polycarbonate resins, polyester resins, polyamide resins, vinyl chloride resins, vinyl acetate resins, polystyrene resins, polyolefin resins, e.g., poly-4-methylpentene, amorphous polyolefins such as those disclosed in US Patent No. 4,614,778, including copolymers of ethylene with 1,4,5,8-dimethano-1,2,3,4,4a,5,8,8a-octahydronaphthalene (tetracyclododecene), copolymers of ethylene with 2-methyl1,4,5,8-dimethano-1,2,3,4,4a,5,8,8a-octahydronaphthalene (methyltetracyclododecene) and copolymers of ethylene with 2-ethyl-1,4,5,8-dimethano-1,2,3,4,4a,5,8,8a-octahydronaphthalene (ethyltetracyclododecene) and polyether sulfone resins, and thermosetting resins such as epoxy resins and allyl resins. Among them, substrates composed of amorphous polyolefin resins are preferred because many kind of solvents for dissolving dyes can be used if the amorphous polyolefin resins are used.

There is no specific limitation with regard to the thickness of the transparent substrates. The transparent substrates may be in any form such as a sheet, a film, a disk or a card and the sizes thereof are particurarly limited. The transparent substrate is generally provided with guide grooves for position control in writing or reading out information, and also provided with recess and protrusion parts for preformatting various marks or address signal. These recess and protrusion parts can be formed, for example, with a stamper in molding the above-described thermoplastic resins by injection molding, compression molding or the like.

The optical recording media of the present invention comprise the transparent substrate and the organic dye thin film layer formed on said substrate, said organic dye thin film layer comprising an organic dye and a liquid organic compound having a boiling point of not lower than 200 °C and capable of dissolving said organic dye.

Examples of organic dyes which can be used in the present invention include aromatic or unsaturated aliphatic diamine metal complexes, aromatic or unsaturated aliphatic dithiol metal complexes, phthalocyanine dyes, naphthalocyanine dyes, squarylium dyes, naphthoquinone dyes, anthraquinone dyes, polymethine dyes and mixtures of two or more of them. Of these, the phthalocyanine dyes, the naphthalocyanine dyes and mixtures thereof are preferred, because they are excellent in heat resistance, easily stacked in the organic dye thin film layer, easily carried out heat treatment and have good optical characteristics and stability.

Liquid organic compounds which are used together with the organic dyes in the organic dye thin film layer of the present invention are those which can dissolve the organic dyes and have a boiling point of not lower than 200 °C, preferably not lower than 250 °C, more preferably not lower than 300 °C. Concrete examples of the liquid organic compounds include dodecylbenzene, glycerin, dihexyl ether, diphenyl ether, dibutyl maleate, phthalate, for example, dialkylphthalate such as dimethyl phthalate, dibutyl phthalate and dioctyl phthalate and dibutyl sebacate.

Of these, the preferred liquid organic compounds are phthalate, for example, dialkylphthalate such as dimethyl phthalate and dibutyl phthalate.

In the organic dye thin film layer of the present invention, the liquid organic compounds are used in an amount of 1 to 400 parts by weight, preferably 1 to 200 parts by weight, more preferably 5 to 100 parts by weight based on 100 parts by weight of the organic dyes.

The above-described liquid organic solvents have a high boiling point. Therefore, they are scarcely evaporated during the manufacturing process of the optical recording media described hereinafter or during the use thereof and are retained in the organic dye thin film.

Since the organic dye thin films as the recording layers of the optical recording media of the present invention contain the liquid organic compound having a boiling point of not lower than 200 °C in addition to the organic dye, recording can be made even with low power and recording sensitivity is excellent as compared with those of optical recording media containing no liquid organic compound.

If desired, the organic dye thin films of the optical recording media of the present invention may contain high-molecular binders. Examples of the high-molecular binders include vinyl chloride resins, acrylic resins, polyester resins, polyamide resins, polycarbonate resins, epoxy resins, methacrylate resins, vinyl acetate resins, nitrocellulose and phenolic resins. When the high-molecular binders are used, the content of the high-molecular binder in the organic dye thin film layer is preferably not higher than 10 % by weight, since the content of the high-molecular binder exceeds 10% by weight thermal motion of the organic dye and stacking may be obstructed.

The thickness of the organic dye thin film layer formed on the transparent substrate is not more than 10 $\mu$m, preferably 500 Å to 2 $\mu$m.

Now, a process for preparing the optical recording media of the present invention will be illustrated below.

First, the above-described organic dye is dissolved or dispersed in an organic solvent to prepare an organic dye solution. Organic solvents having a low boiling point of less than 200 °C, more preferably not higher than 150 °C are used.

Concrete examples of the organic solvents include

(i) alcohols such as methanol, ethanol, 1-propanol, isopropanol, 1-butanol, isobutyl alcohol, tert-butyl alcohol and 1-pentanol;

(ii) ketones such as methyl ethyl ketone, acetone, methyl isobutyl ketone and cyclohexanone;

(iii) amides such as dimethylformamide and dimethylacetamide;

(iv) sulfoxides such as dimethyl sulfoxide;

(v) ethers such as diethyl ether, dipropyl ether and dibutyl ether;

(vi) esters such as ethyl acetate and propyl acetate;

(vii) aliphatic halogenated hydrocarbons such as 1,2-dichloroethane, methyl chloride, carbon tetrachloride, chloroform and dichlorobenzene; and

(viii) aromatic hydrocarbons such as benzene, toluene, xylene and ethylbenzene.

These organic solvents may be used either alone or as a mixture of two or more in a certain ratio.

In the present invention, the above-described liquid organic compound having a boiling point of not lower than 200 C is added to the organic dye solution. In some cases, the above-described organic solvent is previously mixed with the liquid organic compound having a boiling point of not lower than 200 °C, and the organic dye may be dissolved in the resulting mixed solution. If desired, the high-molecular binder may be added to the organic dye solution.

The transparent substrate is coated with the thus-prepared organic dye solution and dried to remove the organic solvent from the resulting organic dye film, whereby the optical recording medium of the present invention can be obtained. The transparent substrate can be coated with the organic dye solution, for example, by spin coating, dip coating, or spray coating, etc.

In the present invention, the organic dye thin film layer as the recording layer formed on the transparent substrate can be heat-treated at a temperature of from 80 to 280 °C, preferably from 100 to 250 °C by heating it from an external heat source. The heating temperature is preferably lower than a boiling point of the liquid organic compound.

The heating time greatly varies depending on the heating temperature, but is preferably from 30 seconds to 90 minutes, more preferably from 3 to 60 minutes. There is no particular limitation with regard to the method for heating the organic dye thin film layer from an external heating source. The heating can be performed by using a heating oven, or contacting the organic dye thin film layer with heated roller or hot plate, irradiating infrared rays to the organic dye thin film layer by using an infrared lamp, or hot pressing the organic dye thin film layer.

It is preferred to heat-treat the organic dye thin film layer as the recording layer as described above, because the optical characteristics and stability of the organic dye thin film can be often improved.

Preferably, the heat-treatment of the organic dye thin film layer is carried out in an inert atmosphere such as nitrogen gas or in an oxygen-containing atmosphere such as air.

After the organic dye thin film is heat-treated at a temperature of 80 to 280 °C, the organic dye thin film may be exposed to vapor of an organic solvent such as chloroform, tetrahydrofuran or toluene, whereby

an absorption wavelength of the organic dye thin film layer is shifted to a side of long wavelength and sensitivity to light in the region of the oscillating wavelength of semiconductor laser is remarkably improved in some cases.

In the present invention, a protective layer can be provided on the organic dye thin film layer formed on the substrate by depositing an inorganic compound such as $Al_2O_3$, $SiO_2$, SiO or SnO. Alternatively, high-molecular binder as described above may be applied on the organic dye thin film layer to form a protective layer.

In producing the optical recording media of the present invention, the organic dye thin film layer may be exposed to the vapor of the organic solvent before the heat treatment. Further, the protective layer may be formed on the organic dye thin film layer before the heat treatment. Recording information on the thus-obtained optical recording media can be made by irradiating to the organic dye thin film layer with laser beam, preferably semiconductor laser beam, which is focused on about 1 μm. The organic dye irradiated with laser beam absorbs laser energy to change physical state thereof such as decomposition, evaporation or fusion. The reproduction of information thus recorded on the organic dye thin film can be made by irradiating laser beam to the thermal changed area and the unchanged area and reading out a difference in reflectance therebetween.

Laser beam for reproducing information has preferably lower energy than that of laser beam for writing information and does not cause thermal change in the state of the organic dye thin film when information is reproduced.

Various laser beam sources such as He-Ne laser, Ar laser and semiconductor laser can be used for recording or reproducing information. However, semiconductor laser is particularly preferred from the viewpoints of cost and size. Laser having central wavelengths of 830 nm, 780 nm and shorter wavelength can be used as semiconductor laser.

As started hereinbefore, information can be recorded to the optical recording media of the present invention with a low power.

The present invention is illustrated below in more detail with reference to examples, but it should be construed that the invention is in no way limited to the examples.

## Example 1

Two parts by weight of the following organic dye (a) was dissolved in a mixed solvent consisting of 4.1 parts by weight of dimethyl phtalate as a liquid organic compound and 95.9 parts by weight of cyclohexanone as an organic solvent.

A substrate made of a copolymer of ethylene and 1,4,5,8-dimethano-1,2,3,4,4a,5,8,8a-octahydronaphthalene was coated with the resulting solution for 30 seconds by means of a spin coater rotated at 800 rpm. The resulting coating film was dried at 100 °C for 30 minutes to form an organic dye thin film layer.

The organic dye thin film layer of the optical recording medium had a thickness of about 850 Å.

Organic dye (a)

Organic dye (a)

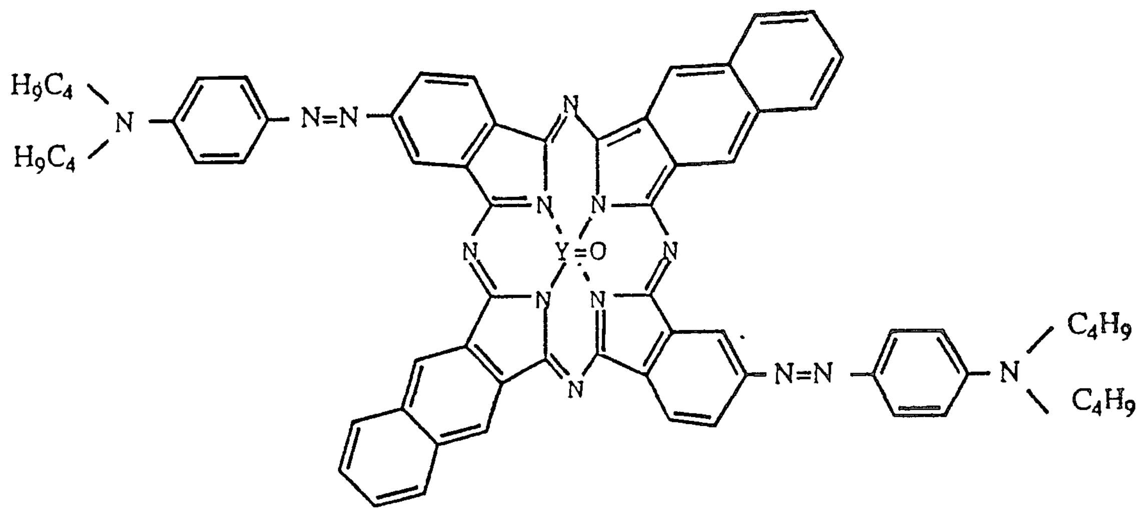

Example 2

The procedure of Example 1 was repeated except that dimethyl phthalate was used in an amount of 2.04 parts by weight and cyclohexanone was used in an amount of 97.96 parts by weight to obtain an optical recording medium.

Example 3

The procedure of Example 1 was repeated except that in place of dimethyl phthalate, dibutyl phthalate was used in an amount of 2.04 parts by weight cyclohexanone was used in an amount of 97.96 parts by weight to obtain an optical recording medium.

Example 4

The procedure of Example 1 was repeated except that the following organic dye (b) was used in place of the organic dye (a) to obtain an optical recording medium. Organic dye (b)

Organic dye (b)

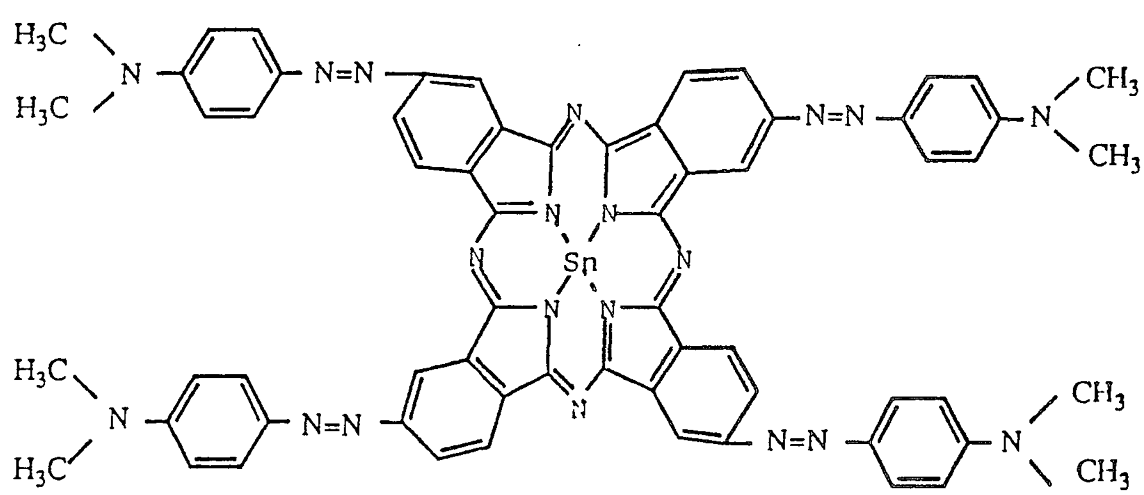

Comparative Example 1

The procedure of Example 1 was repeated except that a solution of 2 parts by weight of the organic dye (a) dissolved in 100 parts by weight of cyclohexane was used to obtain an optical recording medium.

Comparative Example 2

The procedure of Example 1 was repeated except that the organic dye (b) was used in place of the organic dye (a), and a solution of 2 parts by weight of the organic dye (b) dissolved in 100 parts by weight of cyclohexane were used to obtain an optical recording medium.

Evaluation

Recording was made by rotating the optical recording media obtained above examples and comparative examples at a 1800 rpm under such conditions that recording frequency was 1.0 MHz and recording laser power was changed in the range of 1.0 to 10.0 mw. Signal intensity was evaluated with a readout power of 0.6 mW.

The results are shown in Figures 1 and 2.

It is apparent that recording can be made to the optical recording media of the present invention when the recording power is low.

## Claims

1. An optical recording medium comprising a transparent substrate and an organic dye thin film layer formed on said substrate, wherein said organic dye thin film layer comprises an organic dye and a liquid organic compound having a boiling point of not lower than 200 °C and capable of dissolving said organic dye.

2. The optical recording medium as claimed in claim 1, wherein said liquid organic compound has a boiling point of not lower than 300 °C.

3. The optical recording medium as claimed in claim 1, wherein said organic dye is a phthalocyanine dye or a naphthalocyanine dye.

4. A process for preparing an optical recording medium comprising coating a transparent substrate with an organic dye solution of an organic dye to form an organic dye thin film layer on said transparent substrate, wherein that said organic dye solution contains a liquid organic compound having a boiling point of not lower than 200 °C and capable of dissolving said organic dye.

5. The process for preparing an optical recording medium as claimed in claim 1, wherein said liquid organic compound has a boiling point of not lower than 300 °C.

6. The process for preparing an optical recording medium as claimed in claim 1, wherein said organic dye is a phthalocyanine dye or a naphthalocyanine dye.

FIG. 1

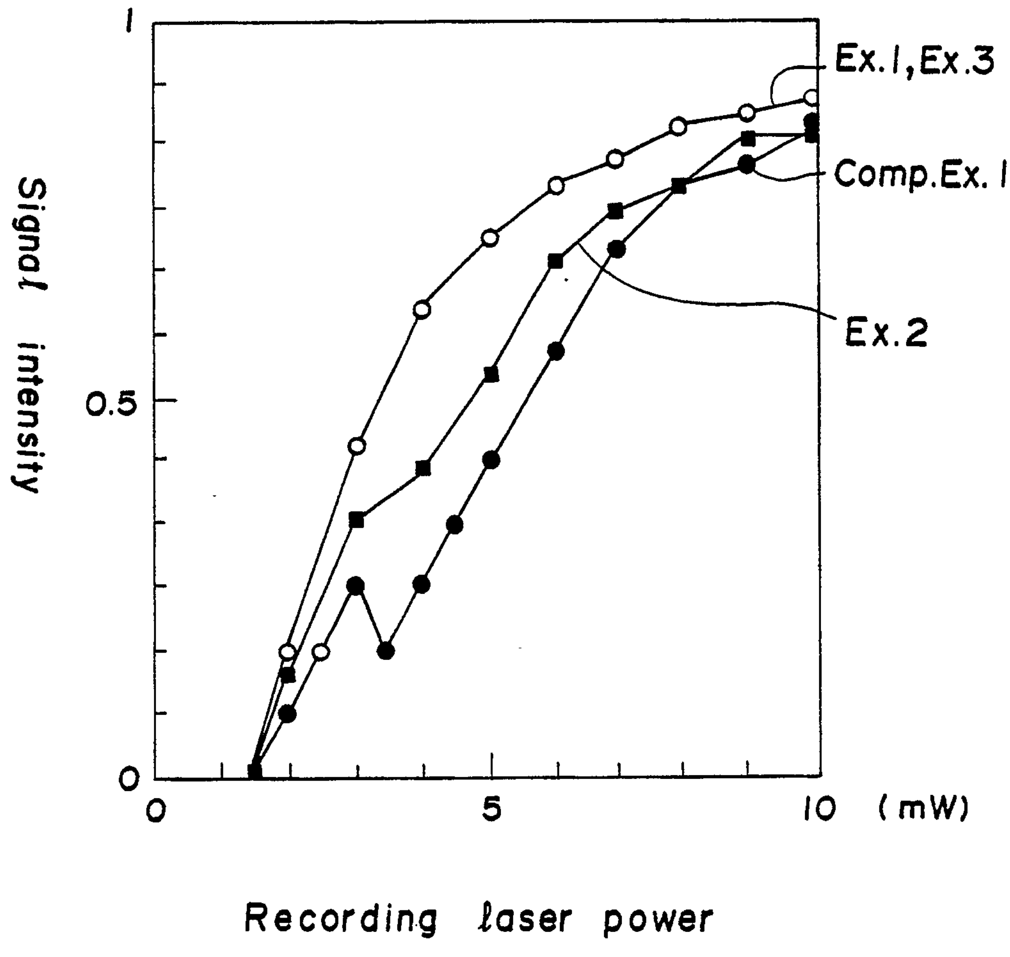
1
0.5
0
0
5
10 (mW)
Ex.1, Ex.3
Comp.Ex.1
Ex.2
Signal intensity
Recording laser power

FIG. 2

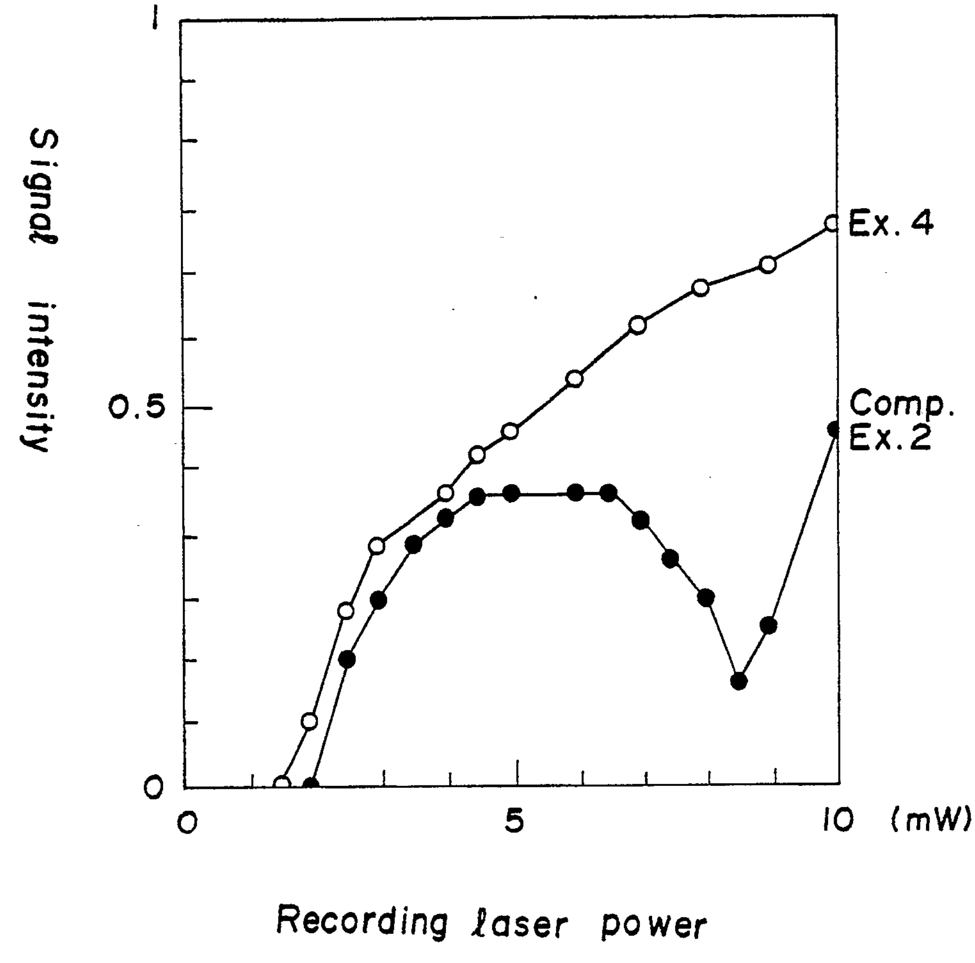
1
0.5
0
Signal intensity
0
5
10 (mW)
Ex. 4
Comp. Ex. 2
Recording laser power